# EUROPEAN PATENT APPLICATION

(11) **EP 2 351 944 A1**
(43) Date of publication of application: **03.08.2011**
(21) Application number: 09825786.8
(22) Date of filing: 30.10.2009
(51) Int. Cl.: F16D 65/14, F16D 55/02, B66B 11/04, B66D 5/14

(54) **ELECTRIC BRAKE FOR LIFTS**

(30) Priority: 11.11.2008 ES 200803223
(71) Applicant: Alzola Elizondo, Luis, 01194 Berrosteguieta (Álava) (ES)
(72) Inventor: Alzola Elizondo, Luis, 01194 Berrosteguieta (Álava) (ES)
(74) Representative: Sanderson, James L.C.
(86) International application number: PCT/ES2009/000522
(87) International publication number: WO 2010/055176

(57) **Abstract**

Electric brake for lifts which consists of a body formed in the manner of a solid disc (1) which is made of ferromagnetic material and which has, formed therein, axially symmetrically and arranged in the form of one ring next to another, a plurality of circular annular recesses (2) which seat respective circular electromagnetic coils (3) which, when excited by the current passing through them, act together on the two semi-circular plates, or movable rims (4) which, when said electrical excitation current is not present, are pressed against the braking disc (5) by resilient means; the resilient means are helical compression springs (6) which are arranged in pairs in a radial arrangement located between two consecutive recesses of the circular annular recesses (2), so that each helical compression spring (6) is located inside a seat (7) which is formed in said solid ferromagnetic disc (1).

## Description

### SCOPE OF THE INVENTION

The present invention relates to an electric brake for lifts and the like. In particular, it relates to a type of brake comprising generally a disk brake, two semi-circular plates or follow rests, a housing containing an electro-magnetic winding and a number of springs arranged between the said housing and the semi-circular plates or the follow rests. If there is no current passing through the winding, there will be no magnetic field and the springs arranged as described will press the semi-circular plates or the follow rests against the disk brake, producing a state in which the lift is electrically braked. When, on the other hand, current passes through the winding, a state of excitation is caused, generating a magnetic field and the semi-circular plates or follow rests are attracted towards the housing against the effect of the springs, with the result that these are separated from the disk brake producing a state in which the lift is not electrically braked.

### STATE OF THE ART

In electrically operated brakes for lifts, current standards require that there are to be two independent braking circuits, so that if one circuit should fail, the other circuit will prevent the lift from falling.

Devices are known in which the magnetic field is produced by a single coil, which - when excited - responds by retracting both plates simultaneously and there are others that contain two independent coils, each one of which attracts one of the plates.

This type of known arrangement generates a single magnetic field, which is characterized in that it is dispersed, as the areas of the north and the south poles formed under the action of the magnetic field are normally, and by virtue of structural requirements, very different, producing high flow density areas, and also in that the force of attraction of the semi-circular plate is different at each point of the contact surface. This brings about an irregular displacement of the semi-circular plate which needs to be compensated by varying the force of the compression springs at each part of the contact surface between the housing and the semi-circular plates or the follow rests. A further disadvantage is produced by the manner in which the coil is accommodated, which, because of the need to maximise the area in the poles to promote the action of the magnetic field, has to be both narrow and deep with the inevitable material and machining costs.

### DESCRIPTION OF THE INVENTION AND ITS ADVANTAGES

In the light of the above situation, the present invention proposes an electric brake for lifts comprising a housing in the form of a solid disk, made of ferromagnetic material and in which, arranged axially symmetrically and in the form of a crown, each one joined to the next, are a number of annular, circular apertures in which are arranged individually circular electromagnetic coils, which, when excited by the passage of the electrical current, operate in unison on the two semi-circular plates or follow rests, which in the absence of such electrical excitation, are pressed against the disk brake by a number of elastic devices. These elastic devices are helical compression springs, arranged in pairs, radially between two of the annular circular apertures in such a way that each helical compression spring is accommodated in a housing located in the said solid ferromagnetic disk. A number of possible alternative embodiments exist for this arrangement. One such option is that the quantity of circular magnetic coils is equal to the quantity of compression helical springs. In this case, as will be shown below, a preferred embodiment consists in that the number of circular electromagnetic coils and of helical compression springs totals eight. In this case, according to a preferred embodiment of the present invention, the pairs of helical compression springs are arranged between pairs of consecutive circular electromagnetic coils in an alternating manner. It can be assumed that in another such option the quantity of circular electromagnetic coils is different from the quantity of helical compression springs.

Lastly, another option could be that the two follow rests or semi-circular plates could be in the form of a single circular rest for use in applications other than lifts.

A further feature of the present invention provides for an embodiment in which the coils are separated into two groups in such a way that each group acts independently on each plate.

In the light of what is known today, the electric brake in the present invention proposes a design in which, because the winding has been fragmented, the magnetic field is focussed and the centres of gravity of the resultant forces coincide with the known increase in the performance that it produces. The distribution of the areas of ferromagnetic material has been optimised, allowing the surfaces of the ferromagnetic material to be aligned, as the density of the lines of the field that they cross is uniform. As well as fragmenting the winding, the depth of the housings of the coils is significantly reduced with the consequent saving of both space and costs, in order to facilitate the machining of these items and to reduce the amount of material required.

This leads to a series of interrelated advantages, including the following:
- one such advantage that has been established is that an improvement in performance in the region of twenty-five percent is obtained;
- with the same consumption of electricity, a stronger magnetic field is generated, which is able to produce a greater force on the follow rests or the semi-circular plates;
- in order to produce the same force for the magnetic field, the winding can be further reduced;
- a reduced winding signifies a lower requirement in terms of space (the dimensions of the brake can be smaller, but still produce the same levels of performance) and thus lower costs;
- for the same end results, the consumption of electricity is reduced, with subsequent reductions in operating costs.

At the same time, the symmetrical and uniform distribution of the electromagnetic coils, together with their rational circular shape, permits a uniform distribution of the action of each coil and, thereby, a more balanced, efficient and reliable output, which also has the effect of increasing the lifespan and making maintenance easier. At the same time, this symmetrical and uniform distribution accentuates the advantageous results indicated in the preceding paragraph.

### DRAWINGS AND REFERENCES

For a better understanding of the present invention, the attached drawings represent an industrial embodiment, which is intended to be merely illustrative and not exhaustive.
Figure 1 shows in exploded form an electric brake for lifts constructed in accordance with the present invention. This figure also shows a separate aspect, in perspective, of the solid ferromagnetic disk (1) which is machined in accordance with the present invention, and a further perspective view of the brake in accordance with the present invention in its fully assembled state.
Figure 2 is in the form of an orthogonal projection and shows the solid ferromagnetic disk, seen from the front face end with the annular circular apertures (2).
Figure 3 shows a section III-III, which is indicated in Figure 2.

These figures contain the following references:
1. The solid ferromagnetic disk
2. The annular circular apertures of the solid ferromagnetic disk (1)
3. Circular electromagnetic coils
4. Follow rests or semi-circular plates
5. Disk brake
6. Helical compression springs
7. Housings in the solid ferromagnetic disc (1) for the helical compression springs (6)

### DESCRIPTION OF A PREFERRED EMBODIMENT

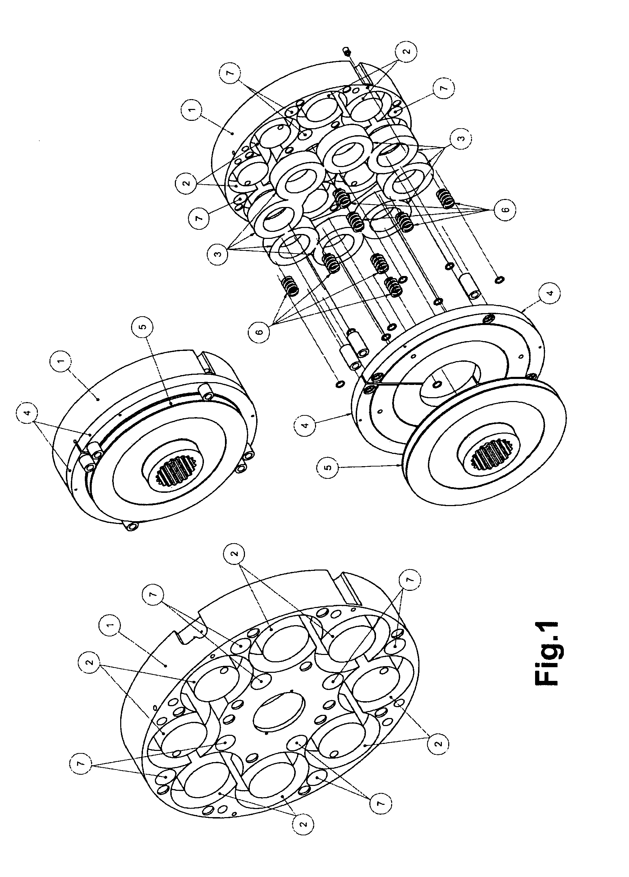

With regard to the drawings and references enumerated above, the attached pages contain an illustration of a preferred embodiment of the present invention, which, as shown in Figure 1, describes an electric brake for lifts comprising a housing in the form of a solid disk (1), made of ferromagnetic material, in which, with axial symmetry and arranged in the form of a crown, one adjacent to the other, there are a number of annular circular apertures (2) accommodating a number of circular electromagnetic coils (3), which, when excited by the passage of an electrical current, operate in unison on the two semi-circular plates or follow rests (4), which, in the absence of such an electrical current, are pressed up against the disk brake (5) by a number of elastic devices. These elastic devices are helical compression springs (6), which are arranged radially in pairs between two consecutive annular circular apertures (2) in such a way that each helical compression spring (6) is in a housing (7) that has been formed in the said solid ferromagnetic disc (1). A glance at Figure 1 will reveal immediately how the circular electromagnetic coils (3) are securely inserted in the solid ferromagnetic disk (1) through the intermediary of the annular circular apertures (2), once the assembly has been completed and the complete set of components shown in the exploded diagram in Figure 1 has been installed. If there is no electrical current passing through the system, there will be no electromagnetic excitation and the expanding effect of the helical compression springs (6) will force the follow rests or the semi-circular plates (4) against the disk brake (1) thereby producing a state of being braked. On the other hand, when an electrical current passes through the system, electromagnetic excitation occurs and the field that is created attracts the follow rests or the semi-circular plates (4) against the helical compression springs (6) by means of a force applied evenly between all the circular electromagnetic coils (3) and the entire surface of the follow rests or the semi-circular plates (4), thereby creating an unbraked state.

The exploded diagram in Figure 1 shows a preferred embodiment of the present invention in which two or more of the said circular electromagnetic coils (3) are arranged in two different groups, which act independently on each of the semi-circular plates or follow rests (4).

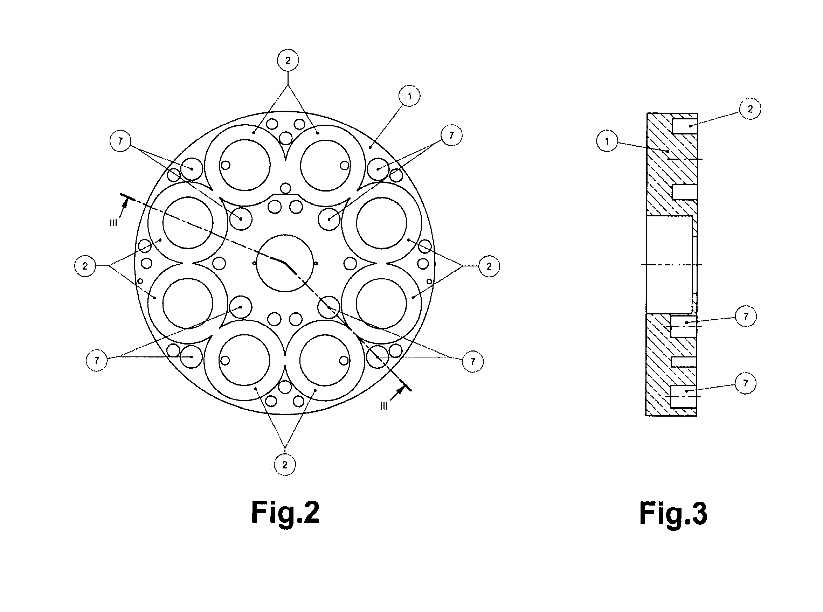

According to the present invention, an embodiment is also possible, in which the number of circular electromagnetic coils (3) differs from that of the helical compression springs (6). Nevertheless, as can be seen in the exploded diagram in Figure 1, the preferred option is that in which the quantity of circular electromagnetic coils (3) is equal to that of the helical compression springs (6), although it is preferable for the quantity of both of these components to total eight. In line with this, both Figure 1 and 2 show the solid ferromagnetic disk (1) as having eight annular circular apertures (2) for the circular ferromagnetic coils (3) and eight housings (7) for the helical compression springs. Figures 1 and 2 also show another preferred embodiment of the invention, in which the pairs of helical compression springs (6) are alternately located between pairs of consecutive circular electromagnetic coils (3).

It is stated that the two semi-circular plates or follow rests (4) can also be joined into a single piece, intended for use is contexts other than lifts.

## Claims

1. Electric brake for lifts **characterised in that** it comprises a housing in the form of a solid disk (1), made from a ferromagnetic material and that, in an axially symmetrical manner, arranged in the form of a crown, one next to the other, there are a number of annular circular apertures (2) accommodating circular magnetic coils (3), which, when excited by the passage of an electrical current, act in unison on the two semi-circular plates or follow rests (4), and which, in the absence of any such electrical excitation, are pressed against the disk brake (5) by a number of elastic devices, these elastic devices being helical compression springs (6) arranged radially in pairs between two of the consecutive annular circular apertures (2) in such a way that each helical compression spring (6) is positioned in a housing (7) produced in the said solid ferromagnetic disc (1).

2. Electric brake for lifts in accordance with claim 1, **characterised in that** the circular electromagnetic coils (3) are combined into two different groups that act independently on each of the plates.

3. Electric brake for lifts in accordance with the above claims, **characterised in that** the quantity of circular electromagnetic coils (3) is equal to the quantity of helical compression springs (6).

4. Electric brake for lifts in accordance with claim 3, **characterised in that** the number of circular electromagnetic coils (3) and the number of helical compression springs (6) total eight.

5. Electric brake for lifts in accordance with claims 1 to 4, **characterised in that** the pairs of helical compression springs (6) are arranged in an alternating manner between pairs of consecutive circular electromagnetic coils (3).

6. Electric brake for lifts in accordance with claims 1 and 2, **characterised in that** the quantity of circular electromagnetic coils (3) differs from that of the helical compression springs (6).

7. Electric brake in accordance with the above claims, **characterised in that** it is stated that the two semi-circular plates or follow rests (4) can also be joined into a single piece, intended for use is contexts other than lifts.
